# EUROPEAN PATENT SPECIFICATION

(11) **EP 4 471 804 B1**
(45) Date of publication and mention of the grant of the patent: **05.08.2026**
(21) Application number: 22923726.8
(22) Date of filing: 25.01.2022
(51) Int. Cl.: G05B 9/03, G05B 19/042, G21D 3/00, G21D 3/04

(54) **MONITORING AND CONTROLLING SYSTEM**
ÜBERWACHUNGS- UND STEUERUNGSSYSTEM
SYSTÈME DE SURVEILLANCE ET DE COMMANDE

(43) Date of publication of application: 04.12.2024
(73) Proprietor: MITSUBISHI ELECTRIC CORPORATION, Chiyoda-ku Tokyo 100-8310 (JP)
(72) Inventor: OKUDA, Susumu, Tokyo 100-8310 (JP)
(74) Representative: Mewburn Ellis LLP
(86) International application number: PCT/JP2022/002513
(87) International publication number: WO 2023/144857

(56) References cited:
- JP-A- 2012 083 231
- JP-A- 2012 103 013
- JP-A- 2017 201 461
- JP-A- S61 290 836
- JP-A- S61 290 836
- US-A1- 2012 323 341
- US-A1- 2013 245 848
- US-A1- 2018 190 395

## Description

### TECHNICAL FIELD

The present disclosure relates to a monitoring and controlling system.

### BACKGROUND ART

A monitoring and controlling system includes a non-safety system for performing operation control of a plant in a normal case, and a safety system for performing protection of the plant in an abnormal case. The safety system and the non-safety system each include local equipment such as a human machine interface (hereinafter, referred to as HMI) system, a distributed control system (hereinafter, referred to as DCS), a sensor, and an actuator. In particular, in a case where a monitoring target is a nuclear power plant, the safety system is required to execute the function of a safety protection device for the plant independently of the non-safety system, and it is necessary to make such designing that the safety function is not hampered and a plurality of safety devices do not perform unnecessary operations, even if the non-safety system transmits any erroneous signal.

As a designing method for addressing such requirements, it is conceivable that a safety HMI system transmits and receives signals to and from only a safety DCS, and a non-safety HMI system transmits and receives signals to and from only a non-safety DCS. However, in this method, it is necessary to monitor and operate both of the safety HMI system and the non-safety DCS in monitoring operation for a plant, so that a load on a plant operator increases. Therefore, in terms of load reduction, it is required to achieve monitoring operation for the entire plant by one of the HMI systems.

For example, Patent Document 1 discloses technology that enables monitoring operation also for safety devices by a non-safety HMI system and achieves independence of a safety system from a non-safety system. That is, this technology makes it possible to perform monitoring operations for both of a safety DCS and a non-safety DCS by the non-safety DCS in a normal case and makes it possible to ensure safety of a plant by a safety HMI system in a case where abnormality has occurred in the non-safety system.

Patent document 2 proposes a device for monitoring an operation of a nuclear plant, including: a functional integration VDU having a regular-use-system VDU that monitors the operation of the plant under normal conditions, and a security-system VDU that leads to a safe state when the plant is in an abnormal state; and a security-system VDU that leads to a safe state when the plant is in an abnormal state.

### CITATION LIST

### PATENT DOCUMENT

Patent Document 1: Japanese Laid-Open Patent Publication No. 2012-83231
Patent Document 2: US 2013/245848 A1

### SUMMARY OF THE INVENTION

### PROBLEM TO BE SOLVED BY THE INVENTION

In the technology disclosed in Patent Document 1, in a case where an operator of the plant has detected abnormality of the non-safety system, the operator operates a blocking device provided to the safety HMI system so that a signal from the non-safety HMI system to the safety system is blocked. Thus, even if abnormality has occurred in the non-safety HMI system, the safety system is not influenced.

However, in this designing, in order to block an erroneous signal from the non-safety HMI system, the plant operator needs to detect abnormality and operate the blocking device, and therefore the plant operator needs to detect abnormality assuredly and quickly. Further, in a case where the non-safety HMI system transmits an erroneous signal in a period until the plant operator detects abnormality after the abnormality has occurred in the non-safety HMI system, the safety DCS and the safety protection device which is a monitoring target might be induced to perform unnecessary operations, although the safety function might not be hampered.

The present disclosure has been made to solve the above problem, and an object of the present disclosure is to provide a monitoring and controlling system having improved safety.

### MEANS TO SOLVE THE PROBLEM

A monitoring and controlling system according to the present disclosure is a monitoring and controlling system of which monitoring-and-control targets are a plant control device for controlling a plant and a safety protection device for performing safety protection of the plant, the monitoring and controlling system including: a non-safety system which monitors and controls the plant control device and the safety protection device; and a safety system which monitors and controls the safety protection device. The non-safety system includes a first operation switch for operating the safety protection device. The safety system includes a second operation switch for operating the safety protection device, a parameter generation circuit which transmits a parameter to the non-safety system, and a coincidence determination circuit which determines whether or not a parameter returned from the non-safety system and the parameter transmitted from the parameter generation circuit coincide with each other. In a case where the coincidence determination circuit determines that the parameters do not coincide with each other, the safety system blocks an output signal from the first operation switch of the non-safety system.

### EFFECT OF THE INVENTION

In the monitoring and controlling system according to the present disclosure, a safety system automatically blocks a signal from a non-safety system when the non-safety system is abnormal, thus improving safety of the monitoring and controlling system.

### BRIEF DESCRIPTION OF THE DRAWINGS

[FIG. 1] FIG. 1 is a block diagram showing the configuration of a monitoring and controlling system according to embodiment 1.
[FIG. 2] FIG. 2 shows flow of signals in a normal case in the monitoring and controlling system according to embodiment 1.
[FIG. 3] FIG. 3 shows flow of signals in an abnormal case in the monitoring and controlling system according to embodiment 1.
[FIG. 4] FIG. 4 is a block diagram showing the configuration of a monitoring and controlling system according to embodiment 2.
[FIG. 5] FIG. 5 is a block diagram showing the configuration of a monitoring and controlling system according to embodiment 3.
[FIG. 6] FIG. 6 is a hardware configuration diagram of a safety system and a non-safety system according to any of embodiments 1 to 4.

### DESCRIPTION OF EMBODIMENTS

Hereinafter, embodiments will be described with reference to the drawings. A case where a monitoring target of a monitoring and controlling system is a nuclear power plant will be described as an example, but the monitoring target is not limited thereto. Another plant may be a target. In the drawings, the same reference characters denote the same or corresponding parts.

### Embodiment 1

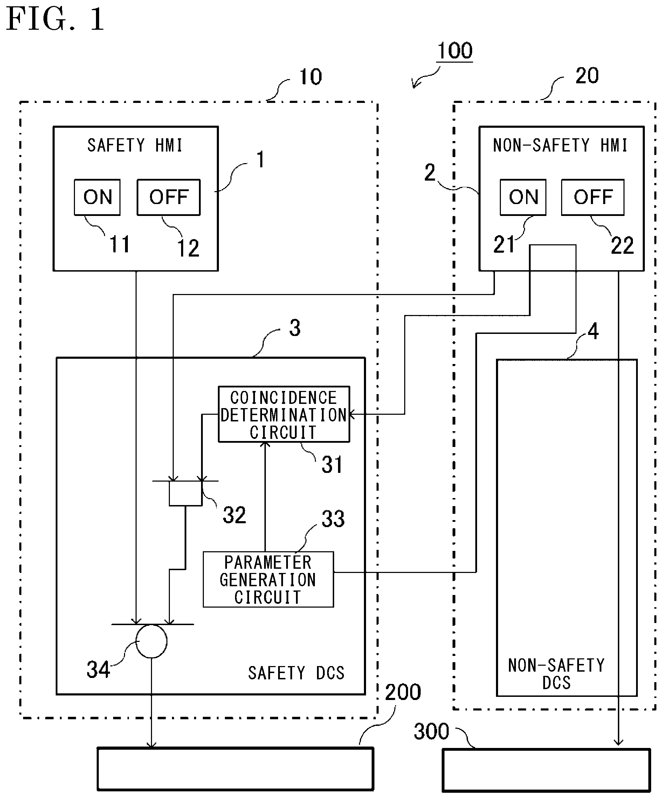

Hereinafter, a monitoring and controlling system according to embodiment 1 will be described with reference to FIG. 1 to FIG. 3.

FIG. 1 is a block diagram showing the configuration of the monitoring and controlling system according to embodiment 1. In FIG. 1, a monitoring and controlling system 100 includes a safety system 10 and a non-safety system 20. The monitoring and controlling system 100 has such a function that, when abnormality has occurred in the non-safety system, the abnormality is detected by the safety system, and a signal from a device that has become abnormal is not received, thus configuring a system having improved safety.

In FIG. 1, the safety system 10 is composed of a safety HMI system 1 and a safety DCS 3. The non-safety system 20 is composed of a non-safety HMI system 2 and a non-safety DCS 4. At the nuclear power plant, a nuclear reactor control device and a device for performing safety protection of a nuclear reactor are provided. The non-safety system 20 monitors and controls both of the nuclear reactor control device and the safety protection device for performing safety protection, and the safety system 10 monitors and controls the safety protection device. The safety protection device for performing safety protection of the nuclear reactor is a device that operates to safely protect the nuclear reactor when abnormality has occurred in the nuclear power plant, and includes various safety protection equipment.

The safety HMI system 1 is provided with an ON-operation switch 11 and an OFF-operation switch 12 for operating a safety protection device 200, and by operating the switches 11, 12, an operation signal is outputted to the safety protection device 200 via the safety DCS 3.

The non-safety HMI system 2 is provided with a switch (not shown) for operating a nuclear reactor control device 300, and an ON-operation switch 21 and an OFF-operation switch 22 for operating the safety protection device 200. By operating the switches 21, 22, an operation signal is outputted to the safety protection device 200 via the safety DCS 3, and by the switch (not shown), an operation signal is outputted to the nuclear reactor control device 300 via the non-safety DCS 4.

Here, description of monitoring and control for the nuclear reactor control device is omitted.

The safety DCS 3 includes a coincidence determination circuit 31, an AND circuit (logical conjunction circuit) 32, a parameter generation circuit 33, and an OR circuit (logical disjunction circuit) 34.

The safety DCS 3 transmits a parameter generated by the parameter generation circuit 33, to the non-safety HMI system 2. The non-safety HMI system 2 returns the parameter received from the parameter generation circuit 33 of the safety DCS 3, to the safety DCS 3.

In the safety DCS 3, the coincidence determination circuit 31 receives the parameter generated by the parameter generation circuit 33 and the parameter returned from the non-safety HMI system 2, and if both signals coincide with each other, an ON signal is outputted to the AND circuit 32.

The AND circuit 32 receives an operation signal from the non-safety HMI system 2, i.e., either an ON signal from the ON-operation switch 21 or an OFF signal from the OFF-operation switch 22, and an output signal from the coincidence determination circuit 31, and only when both signals are ON, the AND circuit 32 outputs an ON signal to the OR circuit 34.

The OR circuit 34 receives an output signal from the AND circuit 32, and an operation signal from the safety HMI system 1, i.e., either an ON signal from the ON-operation switch 11 or an OFF signal from the OFF-operation switch 12. If one of the signals inputted to the OR circuit 34 is ON, the OR circuit 34 outputs an operation signal to the safety protection device 200.

In a case where abnormality has occurred in the non-safety system 20, a signal from the parameter generation circuit 33 of the safety DCS 3 cannot be returned or an abnormality signal is returned. In this case, a parameter generated by the parameter generation circuit 33 and inputted to the coincidence determination circuit 31 and a parameter returned from the non-safety HMI system 2 do not coincide with each other, so that the AND circuit 32 automatically blocks an operation signal outputted from the safety HMI system 1.

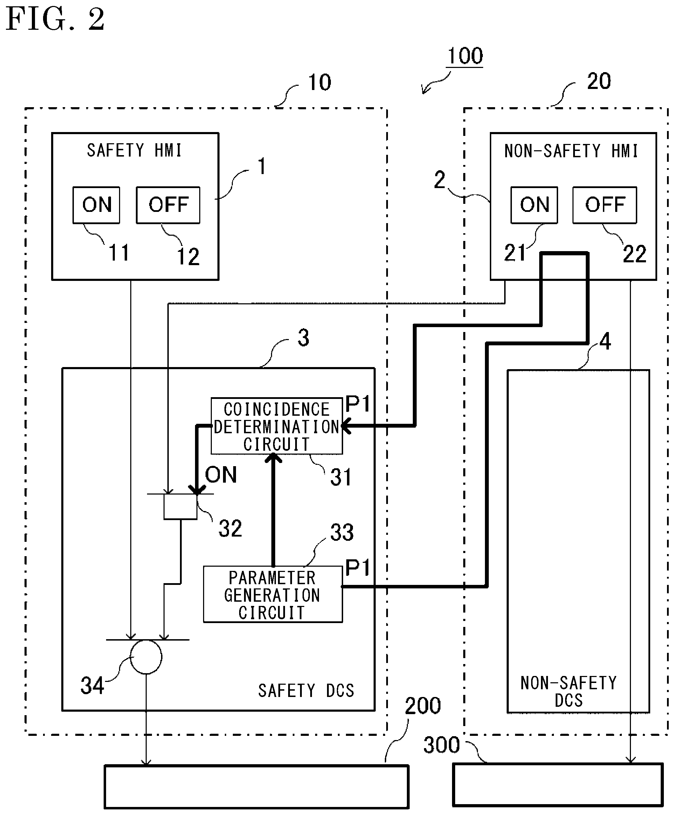

FIG. 2 shows an example of flow of signals in a case where the non-safety system 20 is normal in FIG. 1.

For example, a parameter P1 is generated by the parameter generation circuit 33, and then, in a case where the non-safety system 20 is normal, the parameter P1 is returned to the coincidence determination circuit 31, and the coincidence determination circuit 31 outputs an ON signal to the AND circuit 32.

At this time, if an operation signal from the non-safety HMI system 2 is an ON signal, an ON signal is outputted to the OR circuit 34 and an operation signal is outputted from the safety DCS 3 to local equipment related to safety. On the other hand, if an operation signal from the non-safety HMI system 2 is an OFF signal, an ON signal is not outputted to the OR circuit 34, but if an operation signal from the safety HMI system 1 is ON, an operation signal is outputted from the OR circuit 34 to the safety protection device 200.

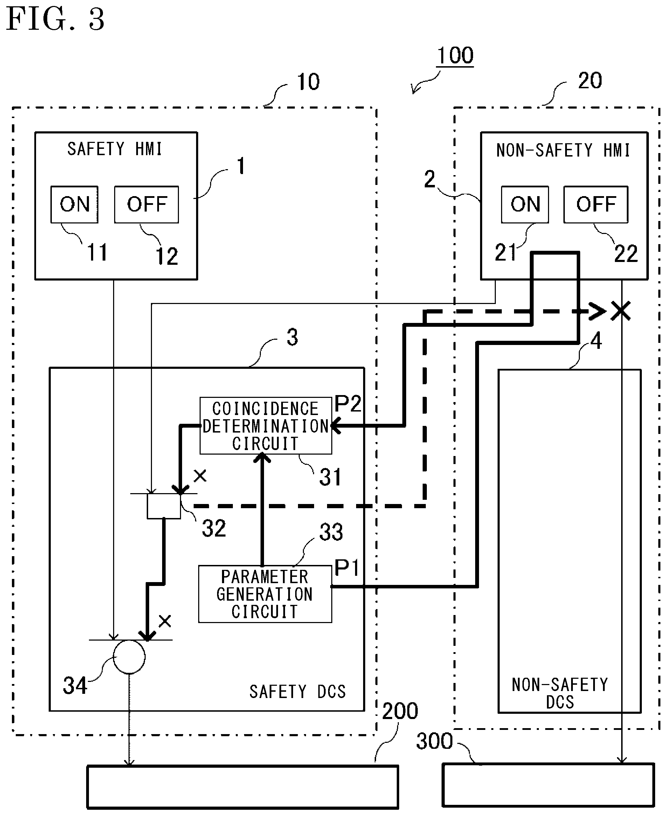

FIG. 3 shows an example of flow of signals in a case where abnormality has occurred in the non-safety system 20 in FIG. 1.

For example, a parameter P1 is generated from the parameter generation circuit 33, and then, in a case where abnormality has occurred in the non-safety system 20, a parameter P2 is returned to the coincidence determination circuit 31, or no parameter is returned. Thus, the coincidence determination circuit 31 does not output an ON signal to the AND circuit 32. In a case where abnormality has occurred, irrespective of whether an operation signal from the non-safety HMI system 2 is an ON signal or an OFF signal, an ON signal is not outputted from the AND circuit 32 to the OR circuit 34. That is, an operation signal from the non-safety HMI system 2 is blocked. Therefore, if an operation signal from the safety HMI system 1 is an ON signal, an operation signal is outputted from the OR circuit 34 to local equipment related to safety, and if an operation signal from the safety HMI system 1 is an OFF signal, an operation signal is not outputted from the OR circuit 34 to the safety protection device 200.

Thus, since an operation signal from the non-safety HMI system 2 is blocked, there is no possibility of causing local equipment related to safety to erroneously operate. If an operation signal from the safety HMI system 1 is switched to an ON signal by the ON-operation switch 11, an operation signal is outputted from the OR circuit 34, whereby the safety protection device 200 can be continuously operated.

In a case where the non-safety HMI system 2 is abnormal, it is desirable that an operation signal from the non-safety HMI system 2 is blocked from being outputted to the nuclear reactor control device 300 via the non-safety DCS 4. For example, as shown by a broken-line arrow in FIG. 3, the AND circuit 32 may block an operation signal from the non-safety HMI system 2 to the nuclear reactor control device 300.

By the way, there is known a technology in which check data is transmitted with its destination set to an own device, and if received data and the transmitted data do not coincide with each other, transmission and reception of signals other than check data are stopped (e.g., Japanese Laid-Open Patent Publication No. 61-290836). However, the monitoring and controlling system 100 according to the present embodiment is not for merely stopping transmission and reception of signals. In a case where abnormality has occurred in the non-safety system, an operation signal from the non-safety HMI system 2 is blocked and therefore there is no possibility of causing the safety protection device 200 to erroneously operate. Further, if an operation signal from the safety HMI system 1 is switched to an ON signal by the ON-operation switch 11, an operation signal is outputted from the OR circuit 34, whereby the safety protection device 200 can be continuously operated. Thus, safety of the monitoring and controlling system configured as a duplex system as described above is improved.

As described above, according to the present embodiment 1, in a case where the non-safety system 20 is abnormal, the safety system 10 automatically blocks an output signal from the non-safety system 20, thus enabling improvement in safety of the monitoring and controlling system 100.

That is, a parameter is transmitted from the safety DCS 3 to the non-safety system 20 which performs transmission to the safety DCS 3, and the non-safety HMI system 2 of the non-safety system 20 that has received the parameter returns a signal to the safety DCS 3, whereby not only a transmission path but also soundness of the non-safety HMI system 2 is confirmed. Thus, in a case where the non-safety HMI system 2 is abnormal, the safety DCS 3 does not permit a signal from the non-safety DCS 4, whereby it is possible to prevent unnecessary operation of the safety function from being performed due to an erroneous signal from the non-safety system 20. In addition, if an operation signal from the safety HMI system 1 is switched to an ON signal by the ON-operation switch 11, an operation signal is outputted from the OR circuit 34, whereby the safety protection device 200 can be continuously operated.

### Embodiment 2

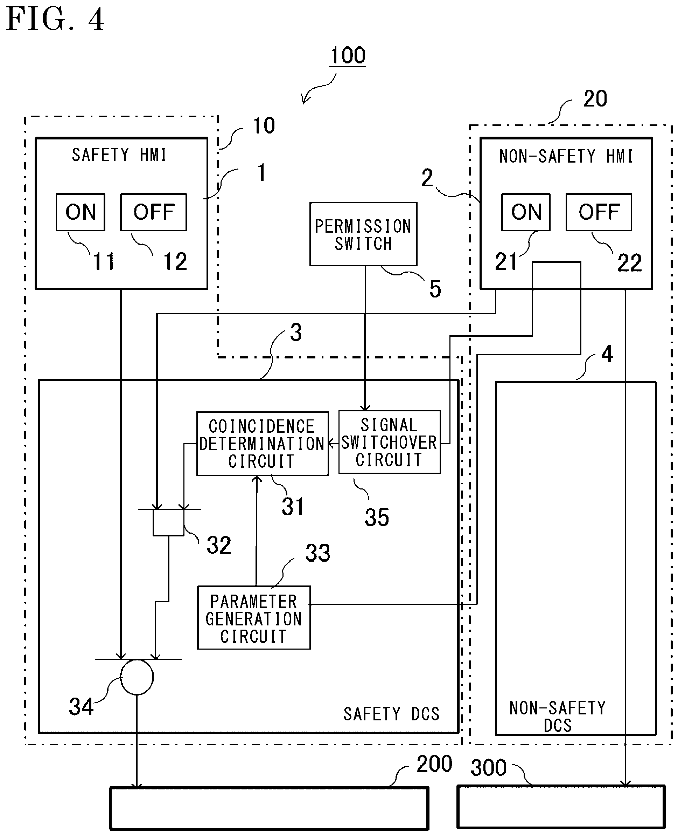

Hereinafter, the configuration of a monitoring and controlling system according to embodiment 2 will be described with reference to FIG. 4.

FIG. 4 is a block diagram showing the configuration of the monitoring and controlling system according to embodiment 2. Difference from embodiment 1 is that a signal switchover circuit 35 is provided in the safety DCS 3 so that a signal to be inputted to the coincidence determination circuit 31 is switched between a parameter returned from the non-safety HMI system 2 and a signal from a permission switch 5 provided outside the safety system 10. The other configurations are the same as those in embodiment 1.

In FIG. 4, the safety DCS 3 transmits a parameter generated by the parameter generation circuit 33, to the non-safety HMI system 2. The non-safety HMI system 2 returns the parameter received from the parameter generation circuit 33 of the safety DCS 3, to the safety DCS 3.

In the safety DCS 3, the parameter returned from the non-safety HMI system 2 is inputted to the coincidence determination circuit 31 through the signal switchover circuit 35.

If a permission signal is inputted from the permission switch 5, the signal switchover circuit 35 outputs the parameter returned from the non-safety HMI system 2, as it is. On the other hand, if a permission signal is not inputted from the permission switch 5, the signal switchover circuit 35 outputs a signal different from the parameter generated by the parameter generation circuit 33.

In the safety DCS 3, the coincidence determination circuit 31 receives the parameter generated by the parameter generation circuit 33 and a signal outputted from the signal switchover circuit 35, and if both signals coincide with each other, the coincidence determination circuit 31 outputs an ON signal to the AND circuit 32. The subsequent operation is the same as that in embodiment 1.

In the above configuration, in a case where operation from the non-safety HMI system 2 is permitted by the permission switch 5, the coincidence determination circuit 31 compares the parameter returned from the non-safety HMI system 2 and the parameter generated by the parameter generation circuit 33, and if both parameters coincide with each other, operation from the non-safety HMI system 2 is accepted. However, in a case where the permission switch 5 does not output a permission signal, signals to be inputted to the coincidence determination circuit 31 can be forcibly controlled not to coincide with each other through operation of the signal switchover circuit 35. Thus, as shown in FIG. 4, an operation signal from the non-safety HMI system 2 can be blocked.

For example, in a case where an operator of the plant has detected abnormality in the non-safety system, the permission switch 5 is operated so as not to output a permission signal, whereby soundness of the system can be kept. In addition, it is also possible to cope with such a situation that the same parameter as a parameter generated by the parameter generation circuit 33 is accidentally returned even though abnormality has occurred in the non-safety system.

As described above, according to embodiment 2, the same effects as those in embodiment 1 are provided. Further, since the permission switch 5 is provided, if abnormality of the non-safety system 20 is detected, the safety DCS 3 can operate so as not to permit a signal from the non-safety DCS 4, whereby safety of the monitoring and controlling system 100 can be further improved.

### Embodiment 3

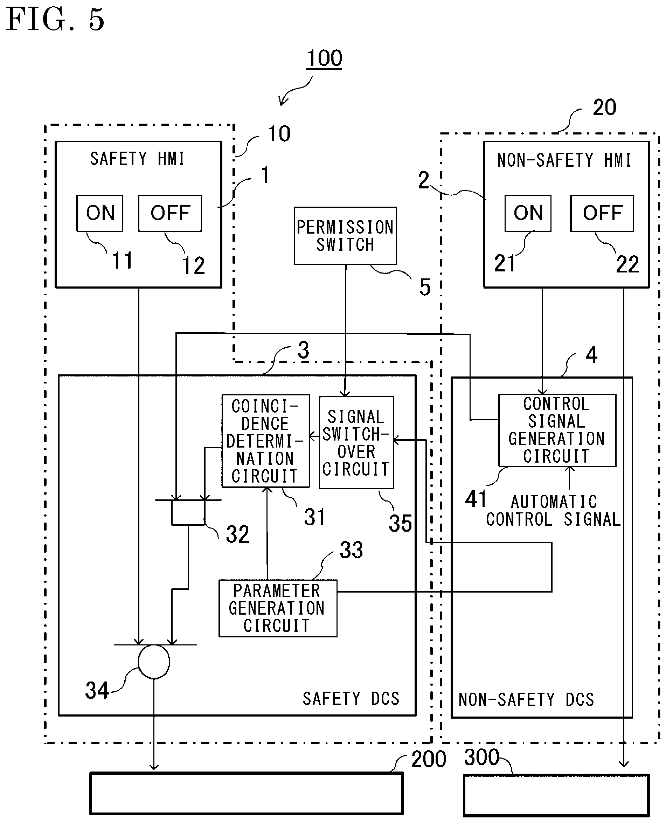

Hereinafter, the configuration of a monitoring and controlling system according to embodiment 3 will be described with reference to FIG. 5.

FIG. 5 is a block diagram showing the configuration of the monitoring and controlling system according to embodiment 3. Difference from embodiment 2 is that a control signal generation circuit 41 is provided in the non-safety DCS 4 and a parameter generated from the parameter generation circuit 33 of the safety DCS 3 is transmitted to the non-safety DCS 4. The other configurations are the same as those in embodiment 2.

As described also in embodiment 1, in FIG. 5, the non-safety HMI system 2 is provided with the ON-operation switch 21 and the OFF-operation switch 22 for operating the safety protection device 200 which is monitoring target equipment, and by operating the switches 21, 22, an operation signal is outputted to the safety protection device 200 via the non-safety DCS 4. Further, in the present embodiment 3, by operating the switches 21, 22, an operation signal is transmitted to the safety DCS 3 through the non-safety DCS 4. The control signal generation circuit 41 provided in the non-safety DCS 4 receives an operation signal from the non-safety HMI system 2 and receives an automatic control signal, and a signal generated on the basis of the above signals is transmitted to the safety DCS 3.

Next, operation will be described.

The safety DCS 3 transmits a parameter generated by the parameter generation circuit 33, to the non-safety DCS 4. The non-safety DCS 4 returns the parameter received from the parameter generation circuit 33 of the safety DCS 3, to the safety DCS 3.

In the safety DCS 3, the parameter returned from the non-safety DCS 4 is inputted to the coincidence determination circuit 31 through the signal switchover circuit 35.

If a permission signal is inputted from the permission switch 5, the signal switchover circuit 35 outputs the parameter returned from the non-safety DCS 4, as it is. On the other hand, if a permission signal is not inputted from the permission switch 5, the signal switchover circuit 35 outputs a signal different from the parameter generated by the parameter generation circuit 33. That is, as in embodiment 2, the signal switchover circuit 35 switches a signal to be inputted to the coincidence determination circuit 31, by the signal from the permission switch 5.

Thus, since an operation signal from the non-safety HMI system 2 is inputted to the safety DCS 3 through the non-safety DCS 4, not only an operation signal from the non-safety HMI system 2 but also an automatic control signal from the non-safety DCS 4 to the safety DCS 3 becomes a determination target in the coincidence determination circuit 31. In this way, soundness of the non-safety HMI system 2 and the non-safety DCS 4 can be confirmed.

As described above, according to embodiment 3, the same effects as those in embodiments 1 and 2 are provided. Further, since soundness of both of the non-safety HMI system 2 and the non-safety DCS 4 is confirmed, safety of the monitoring and controlling system 100 can be further improved.

### Embodiment 4

In embodiments 1 to 3, it has been described that a parameter generated from the parameter generation circuit 33 is transmitted. In this regard, the parameter to be generated by the parameter generation circuit 33 may be changed at certain time intervals. In a case where an abnormal state in which a return signal from the non-safety HMI system 2 or a signal outputted from the non-safety DCS 4 is fixed has occurred, if the parameter is changed at certain time intervals, the abnormal state can be found on the basis of whether or not the non-safety HMI system 2 or the non-safety DCS 4 successfully responds to the changed parameter. That is, in such an abnormal state as described above, the parameters do not coincide with each other in the coincidence determination circuit 31 and thus abnormality can be detected.

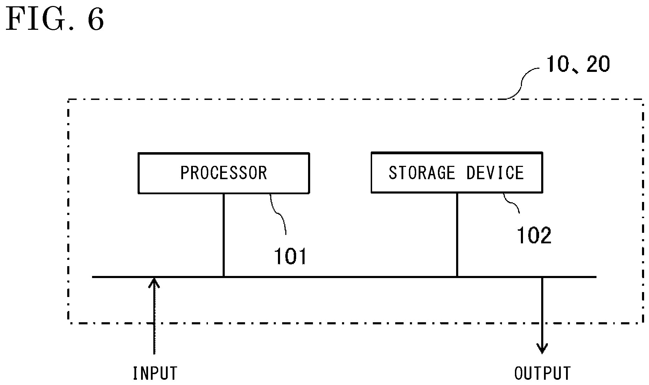

In the above embodiments 1 to 4, the safety system 10 and the non-safety system 20 of the monitoring and controlling system 100 is formed by a processor 101 and a storage device 102 as shown in a hardware example in FIG. 6. Although not shown, the storage device is provided with a volatile storage device such as a random access memory and a nonvolatile auxiliary storage device such as a flash memory. Instead of the flash memory, an auxiliary storage device of a hard disk may be provided. The processor 101 executes a program inputted from the storage device 102. In this case, the program is inputted from the auxiliary storage device to the processor 101 via the volatile storage device. The processor 101 may output data such as a calculation result to the volatile storage device of the storage device 102, or may store such data into the auxiliary storage device via the volatile storage device.

The safety HMI system 1 and the safety DCS 3 of the safety system 10 and the non-safety HMI system 2 and the non-safety DCS 4 of the non-safety system 20 may each have the configuration of hardware as shown in FIG. 6.

In the above embodiments 1 to 4, in a case where monitoring target equipment is a general plant, it can be construed that the non-safety system 20 monitors and controls a control device for a plant and a safety protection device for the plant, and the safety system 10 monitors and controls the safety protection device for the plant. That is, an example of the plant is a nuclear power plant, and an example of the most preferable target of monitoring and control in the present disclosure is a nuclear power plant.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure.

### DESCRIPTION OF THE REFERENCE CHARACTERS

1 safety HMI system
2 non-safety HMI system
3 safety DCS
4 non-safety DCS
5 permission switch
10 safety system
20 non-safety system
11, 21 ON-operation switch
12, 22 OFF-operation switch
31 coincidence determination circuit
32 AND circuit
33 parameter generation circuit
34 OR circuit
35 signal switchover circuit
41 control signal generation circuit
100 monitoring and controlling system
101 processor
102 storage device
200 safety protection device
300 nuclear reactor control device

## Claims

1. A monitoring and controlling system (100) of which monitoring-and-control targets are a plant control device (300) for controlling a plant and a safety protection device (200) for performing safety protection of the plant, the monitoring and controlling system (100) comprising:
a non-safety system (20) which monitors and controls the plant control device (300) and the safety protection device (200); and
a safety system (10) which monitors and controls the safety protection device (200), wherein
the non-safety system (20) includes a first operation switch (21,22) for operating the safety protection device (200), and
the safety system (10) includes a second operation switch (11,12) for operating the safety protection device (200), **characterised in that**:
the safety system (10) includes a parameter generation circuit (33) which transmits a parameter to the non-safety system (20), and a coincidence determination circuit (31) which determines whether or not a parameter returned from the non-safety system (20) and the parameter transmitted from the parameter generation circuit (33) coincide with each other, and
in a case where the coincidence determination circuit (31) determines that the parameters do not coincide with each other, the safety system (10) blocks an output signal from the first operation switch (21,22) of the non-safety system (20).

2. The monitoring and controlling system (100) according to claim 1, further comprising a permission switch (5) outside the safety system (10), wherein
in a case where a permission signal is inputted from the permission switch (5) to the safety system (10), the parameter returned from the non-safety system (20) is inputted to the coincidence determination circuit (31), and
in a case where the permission signal is not inputted from the permission switch (5), a signal different from the parameter generated by the parameter generation circuit (33) is inputted to the coincidence determination circuit (31).

3. The monitoring and controlling system (100) according to claim 1 or 2, wherein
the non-safety system (20) includes a non-safety HMI system (2) having the first operation switch (21,22), and a non-safety DCS (4) which outputs the output signal from the first operation switch (21,22), to the safety protection device (200), and
the parameter transmitted from the parameter generation circuit (33) is returned by the non-safety HMI system (2).

4. The monitoring and controlling system (100) according to claim 3, wherein
the safety system (10) further includes an AND circuit (32) which receives an output of the coincidence determination circuit (31) and an operation signal outputted from the first operation switch (21,22), and an OR circuit (34) which receives an output of the AND circuit (32) and an operation signal outputted from the second operation switch (11,12).

5. The monitoring and controlling system (100) according to claim 1 or 2, wherein
the safety system (10) further includes an AND circuit (32) which receives an output of the coincidence determination circuit (31) and an operation signal outputted from the first operation switch (21,22), and an OR circuit (34) which receives an output of the AND circuit (32) and an operation signal outputted from the second operation switch (11,12).

6. The monitoring and controlling system (100) according to claim 5, wherein
the non-safety system (20) includes a non-safety HMI system (2) having the first operation switch (21,22), and a non-safety DCS (4) which outputs the operation signal outputted from the first operation switch (21,22), to the safety protection device (200),
the non-safety DCS (4) includes a control signal generation circuit (41) which receives the operation signal outputted from the first operation switch (21,22) and generates a control signal, and the parameter transmitted from the parameter generation circuit (33) is returned by the non-safety DCS (4), and
the AND circuit (32) of the safety system (10) receives an output of the coincidence determination circuit (31) and the control signal generated by the control signal generation circuit (41) on the basis of the received operation signal outputted from the first operation switch (21,22).

7. The monitoring and controlling system (100) according to any one of claims 1 to 6, wherein
the parameter generation circuit (33) transmits the parameter while periodically changing the parameter to be generated.

8. The monitoring and controlling system (100) according to any one of claims 1 to 7, wherein
the plant as the monitoring-and-control target is a nuclear power plant, the plant control device (300) is a nuclear reactor control device, and the safety protection device (200) is a safety protection device for a nuclear reactor.

## Patentansprüche

1. Überwachungs- und Steuersystem (100), dessen Überwachungs- und Steuerungsziele eine Anlagensteuerungsvorrichtung (300) zum Steuern einer Anlage und eine Sicherheitsschutzvorrichtung (200) zum Durchführen eines Sicherheitsschutzes der Anlage sind, wobei das Überwachungs- und Steuersystem (100) Folgendes umfasst:
ein Nichtsicherheitssystem (20), das die Anlagensteuerungsvorrichtung (300) und die Sicherheitsschutzvorrichtung (200) überwacht und steuert; und
ein Sicherheitssystem (10), welches die Sicherheitsschutzvorrichtung (200) überwacht und steuert, wobei
das Nichtsicherheitssystem (20) einen ersten Betriebsschalter (21, 22) zum Betreiben der Sicherheitsschutzvorrichtung (200) umfasst und
das Sicherheitssystem (10) einen zweiten Betriebsschalter (11, 12) zum Betreiben der Sicherheitsschutzvorrichtung (200) umfasst, **dadurch gekennzeichnet, dass**:
das Sicherheitssystem (10) eine Parametererzeugungsschaltung (33), die einen Parameter an das Nichtsicherheitssystem (20) sendet, und eine Übereinstimmungsbestimmungsschaltung (31) umfasst, die bestimmt, ob ein von dem Nichtsicherheitssystem (20) zurückgesendeter Parameter und der von der Parametererzeugungsschaltung (33) gesendete Parameter miteinander übereinstimmen, und
in dem Fall, dass die Übereinstimmungsbestimmungsschaltung (31) bestimmt, dass die Parameter nicht miteinander übereinstimmen, das Sicherheitssystem (10) ein Ausgangssignal von dem ersten Betriebsschalter (21, 22) des Nichtsicherheitssystems (20) blockiert.

2. Überwachungs- und Steuersystem (100) nach Anspruch 1, ferner umfassend einen Genehmigungsschalter (5) außerhalb des Sicherheitssystems (10), wobei
in dem Fall, dass ein Genehmigungssignal von dem Genehmigungsschalter (5) in das Sicherheitssystem (10) eingegeben wird, der von dem Nichtsicherheitssystem (20) zurückgesendete Parameter in die Übereinstimmungsbestimmungsschaltung (31) eingegeben wird, und
in dem Fall, dass das Genehmigungssignal nicht von dem Genehmigungsschalter (5) eingegeben wird, ein Signal, das sich von dem durch die Parametererzeugungsschaltung (33) erzeugten Parameter unterscheidet, in die Übereinstimmungsbestimmungsschaltung (31) eingegeben wird.

3. Überwachungs- und Steuersystem (100) nach Anspruch 1 oder 2, wobei
das Nichtsicherheitssystem (20) ein Nichtsicherheits-HMI-System (2) mit dem ersten Betriebsschalter (21, 22) und ein Nichtsicherheits-DCS (4), umfasst, welches das Ausgangssignal von dem ersten Betriebsschalter (21, 22) an die Sicherheitsschutzvorrichtung (200) ausgibt, und
der von der Parametererzeugungsschaltung (33) gesendete Parameter durch das Nichtsicherheits-HMI-System (2) zurückgesendet wird.

4. Überwachungs- und Steuersystem (100) nach Anspruch 3, wobei
das Sicherheitssystem (10) ferner eine UND-Schaltung (32), die eine Ausgabe der Übereinstimmungsbestimmungsschaltung (31) und ein von dem ersten Betriebsschalter (21, 22) ausgegebenes Betriebssignal empfängt, und eine ODER-Schaltung (34) umfasst, die eine Ausgabe der UND-Schaltung (32) und ein von dem zweiten Betriebsschalter (11, 12) ausgegebenes Betriebssignal empfängt.

5. Überwachungs- und Steuersystem (100) nach Anspruch 1 oder 2, wobei
das Sicherheitssystem (10) ferner eine UND-Schaltung (32), die eine Ausgabe der Übereinstimmungsbestimmungsschaltung (31) und ein von dem ersten Betriebsschalter (21, 22) ausgegebenes Betriebssignal empfängt, und eine ODER-Schaltung (34) umfasst, die eine Ausgabe der UND-Schaltung (32) und ein von dem zweiten Betriebsschalter (11, 12) ausgegebenes Betriebssignal empfängt.

6. Überwachungs- und Steuersystem (100) nach Anspruch 5, wobei
das Nichtsicherheitssystem (20) ein Nichtsicherheits-HMI-System (2) mit dem ersten Betriebsschalter (21, 22) und ein Nichtsicherheits-DCS (4) umfasst, welches das von dem ersten Betriebsschalter (21, 22) ausgegebene Betriebssignal an die Sicherheitsschutzvorrichtung (200) ausgibt,
das Nichtsicherheits-DCS (4) eine Steuersignalerzeugungsschaltung (41) umfasst, welche das von dem ersten Betriebsschalter (21, 22) ausgegebene Betriebssignal empfängt und ein Steuersignal erzeugt, und wobei der von der Parametererzeugungsschaltung (33) gesendete Parameter durch die Nichtsicherheits-DCS (4) zurückgesendet wird, und
die UND-Schaltung (32) des Sicherheitssystems (10) eine Ausgabe der Übereinstimmungsbestimmungsschaltung (31) und das durch die Steuersignalerzeugungsschaltung (41) erzeugte Steuersignal auf Basis des empfangenen, von dem ersten Betriebsschalter (21, 22) ausgegeben Betriebssignals empfängt.

7. Überwachungs- und Steuersystem (100) nach einem der Ansprüche 1 bis 6, wobei
die Parametererzeugungsschaltung (33) den Parameter sendet, während sie den zu erzeugenden Parameter periodisch ändert.

8. Überwachungs- und Steuersystem (100) nach einem der Ansprüche 1 bis 7, wobei
die Anlage als Überwachungs- und Steuerziel ein Atomkraftwerk ist, wobei die Anlagensteuerungsvorrichtung (300) eine Atomreaktorsteuervorrichtung ist und die Sicherheitsschutzvorrichtung (200) eine Sicherheitsschutzvorrichtung für einen Atomreaktor ist.

## Revendications

1. Système de surveillance et de commande (100) dont des cibles de surveillance et de commande sont un dispositif de commande d'installation (300) destiné à commander une installation et un dispositif de protection de sécurité (200) destiné à effectuer une protection de sécurité de l'installation, le système de surveillance et de commande (100) comprenant :
un système de non-sécurité (20) qui surveille et commande le dispositif de commande d'installation (300) et le dispositif de protection de sécurité (200) ; et
un système de sécurité (10) qui surveille et commande le dispositif de protection de sécurité (200), dans lequel
le système de non-sécurité (20) inclut un premier commutateur de fonctionnement (21, 22) pour faire fonctionner le dispositif de protection de sécurité (200), et
le système de sécurité (10) inclut un second commutateur de fonctionnement (11, 12) pour faire fonctionner le dispositif de protection de sécurité (200), **caractérisé en ce que** :
le système de sécurité (10) inclut un circuit de génération de paramètre (33) qui transmet un paramètre au système de non-sécurité (20), et un circuit de détermination de correspondance (31) qui détermine si un paramètre renvoyé par le système de non-sécurité (20) et le paramètre transmis par le circuit de génération de paramètres (33) coïncident ou non, et
dans un cas dans lequel le circuit de détermination de coïncidence (31) détermine que les paramètres ne coïncident pas l'un avec l'autre, le système de sécurité (10) bloque un signal de sortie provenant du premier commutateur de fonctionnement (21, 22) du système de non-sécurité (20).

2. Système de surveillance et de commande (100) selon la revendication 1, comprenant en outre un commutateur d'autorisation (5) à l'extérieur du système de sécurité (10), dans lequel
dans un cas dans lequel un signal d'autorisation est entré à partir du commutateur d'autorisation (5) vers le système de sécurité (10), le paramètre renvoyé par le système de non-sécurité (20) est entré dans le circuit de détermination de coïncidence (31), et
dans un cas dans lequel le signal d'autorisation n'est pas entré à partir du commutateur d'autorisation (5), un signal différent du paramètre généré par le circuit de génération de paramètre (33) est entré dans le circuit de détermination de coïncidence (31).

3. Système de surveillance et de commande (100) selon la revendication 1 ou 2, dans lequel
le système de non-sécurité (20) inclut un système d'IHM de non-sécurité (2) présentant le premier commutateur de fonctionnement (21, 22), et un DCS de non-sécurité (4) qui délivre en sortie le signal de sortie du premier commutateur de fonctionnement (21, 22) au dispositif de protection de sécurité (200), et
le paramètre transmis depuis le circuit de génération de paramètre (33) est renvoyé par le système d'IHM de non sécurité (2).

4. Système de surveillance et de commande (100) selon la revendication 3, dans lequel
le système de sécurité (10) inclut en outre un circuit AND (32) qui reçoit une sortie du circuit de détermination de coïncidence (31) et un signal de fonctionnement délivré en sortie par le premier commutateur de fonctionnement (21, 22), et un circuit OR (34) qui reçoit une sortie du circuit AND (32) et un signal de fonctionnement délivré en sortie par le second commutateur de fonctionnement (11, 12).

5. Système de surveillance et de commande (100) selon la revendication 1 ou 2, dans lequel
le système de sécurité (10) inclut en outre un circuit AND (32) qui reçoit une sortie du circuit de détermination de coïncidence (31) et un signal de fonctionnement délivré en sortie par le premier commutateur de fonctionnement (21, 22), et un circuit OR (34) qui reçoit une sortie du circuit OR (32) et un signal de fonctionnement délivré en sortie par le second commutateur de fonctionnement (11, 12).

6. Système de surveillance et de commande (100) selon la revendication 5, dans lequel
le système de non-sécurité (20) inclut un système d'IHM de non-sécurité (2) présentant le premier commutateur de fonctionnement (21, 22), et un DCS de non-sécurité (4) qui délivre en sortie le signal de fonctionnement délivré en sortie par le premier commutateur de fonctionnement (21, 22), au dispositif de protection de sécurité (200),
le DCS de non sécurité (4) inclut un circuit de génération de signal de commande (41) qui reçoit le signal de fonctionnement délivré en sortie par le premier commutateur de fonctionnement (21, 22) et génère un signal de commande, et le paramètre transmis par le circuit de génération de paramètre (33) est renvoyé par le DCS de non sécurité (4), et
le circuit AND (32) du système de sécurité (10) reçoit une sortie du circuit de détermination de coïncidence (31) et le signal de commande généré par le circuit de génération de signal de commande (41) sur la base du signal de fonctionnement reçu délivré en sortie par le premier commutateur de fonctionnement (21, 22).

7. Système de surveillance et de commande (100) selon l'une quelconque des revendications 1 à 6, dans lequel
le circuit de génération de paramètre (33) transmet le paramètre tout en changeant périodiquement le paramètre à générer.

8. Système de surveillance et de commande (100) selon l'une quelconque des revendications 1 à 7, dans lequel
l'installation en tant que cible de surveillance et de commande est une centrale nucléaire, le dispositif de commande d'installation (300) est un dispositif de commande de réacteur nucléaire, et le dispositif de protection de sécurité (200) est un dispositif de protection de sécurité pour un réacteur nucléaire.
